# EUROPEAN PATENT APPLICATION

(11) **EP 0 854 023 A2**
(43) Date of publication of application: **22.07.1998**
(21) Application number: 97610054.5
(22) Date of filing: 03.12.1997
(51) Int. Cl.: B29C 37/02, B26D 1/00, B26D 7/18

(54) **A tool for automatically cutting off the moulding excess resulting from moulded plastic blanks**

(30) Priority: 23.12.1996 DK 149996
(71) Applicant: A/S Eccolet Sko, 6261 Bredebro (DK)
(72) Inventor: Thomsen, Leif, 6600 Vejen (DK)
(74) Representative: Noergaard, Tage

(57) **Abstract**

The tool comprises a plate (9), on which a self-centering cutting knife (10) is suspended. A pair of co-acting pulling off rollers (18a, 18b) are provided adjacent the cutting knife (10), said pulling off rollers pulling off the moulding excess, such as fin material, cut off from each blank. The resulting removal of the moulding excess from the plastic blank is more accurate than hitherto known also from blanks with concave surfaces with the result that the surface of the finished blank is provided with a smooth appearance.

## Description

The invention relates to a tool for automatically cutting off the moulding excess resulting from moulded plastic blanks, such as soles moulded directly onto shoes, whereby the individual blanks are fixed in a fixture and the tool is moved for instance by a manipulating industrial robot, or vice versa the tool is fixed in the fixture and the blank is moved by the robot.

A machine is known for automatically cutting off the moulding excess resulting from moulded plastic blanks, said machine employing a manipulating industrial robot for advancing a tool in form of a quickly operating pair of scissors. Such a tool renders it possible to remove the moulding excess, but it turned out that the machine does not operate in a completely satisfying manner because it does not allow a removal of the moulding excess from concave surfaces of the blank, and because the cut is not a clear cut, but presents a jagged or rough appearance.

The object of the invention is to provide a tool of the above type which allows a more accurate removal of the moulding excess from the plastic blank than hitherto known, as well as a removal of the moulding excess from blanks with concave surfaces with the result that the surface of the finished blank is provided with a smooth appearance.

The tool according to the invention is characterised in that it comprises a plate, where a self-centering cutting knife tool is suspended on said plate, and that pulling off means, such as a pair of pulling off rollers, are provided adjacent said knife for pulling off the moulding excess cut off from each blank, such as fin material. As a result, the moulding excess, such as the moulding fin, can be cut off from each blank very quickly because the cutting knife moves automatically to the "root" of the moulding excess on the blank. No notches are formed in the surface of the blank, and accordingly said surface presents a completely smooth appearance.

The cutting knife may according to the invention be mounted on the plate by means of a supporting arm which is movable about two axes relative to the plate, and the cutting knife may be provided with a substantially V-shaped insertion. The easy movability of the supporting arm and the V-shaped insertion of the knife have the result that the knife is self-centering in the cutting direction and that the tool is extremely reliable in operation. The cutting off of the moulding excess is carried out in a very accurate manner.

Moreover, the supporting arm may according to the invention be retained/controlled in the moment the cutting is initiated by means of a first and a second pneumatic cylinder, which are arranged substantially parallel to the plate, as well as by means of a third and a fourth pneumatic cylinder arranged substantially perpendicular to said plate. During the cutting procedure, the first cylinder arranged parallel to the plate presses the knife towards the plate while the three remaining cylinders are inactive.

According to the invention the first pneumatic cylinder may be adapted to press the cutting knife against the blank during the cutting procedure with the result that a smooth cutting surface is obtained because the knife can be slightly displaced to the sides.

Furthermore, the cutting knife may according to the invention be shaped substantially as a square root symbol when seen from the end, whereby a V-shaped insertion may be provided in the V-shaped portion thereof. The resulting embodiment turned out to be particularly advantageous,

According to the invention the co-acting pulling off rollers of the pulling off means may be provided with a rough and/or worm-like surface and preferably rotate at a circumferential velocity being three to four times higher than the cutting velocity of the knife. As a result, the material to be cut off can in a very reliable manner be pulled thinner and consequently be made more sensitive to insertion effects, i.e. it is made more sensitive to the knife in the moment said knife penetrates into the material.

Moreover, at least one of the shafts of the pulling off rollers may according to the invention be resilient, a cardan joint forming part of said shaft, whereby the distance between the pulling off rollers may be adjustable by means of a pneumatic adjustment cylinder coupled to one of said pulling off rollers. In this manner it is possible to open the gap between the two pulling off cylinders in a controlled manner in the starting moment where the pulling off rollers are to catch the moulding excess, and accordingly the starting of the cutting procedure is initiated in a very reliable manner.

Moreover, a suction funnel for removal of the moulding excess cut off may according to the invention be mounted on a housing for the pulling off rollers whereby it is ensured that said moulding excess cut off can be completely removed from said pulling off rollers.

The pulling off rollers may according to the invention be driven by a motor through a gear wheel arrangement, said motor being placed adjacent said arrangement, whereby a particularly good possibility of controlling the removal of the moulding excess is ensured.

Finally, the two pulling off rollers may according to the invention be secured to the plate substantially parallel to said plate, whereby a particularly simple mounting of said pulling off rollers is allowed.

The invention is explained in detail below with reference to the drawing, in which
Figure 1 is a side view of an embodiment of a tool according to the invention, whereby the pulling off means have been removed,
Figure 2 is a left side view of the embodiment of Figure 1, whereby the pulling off means have been removed,
Figure 3 is a top view of the tool shown in Figure 1,
Figure 4 is a vertical sectional view of the pulling off means and the associated members,
Figure 5 is a top view of the pulling off means, a suction funnel being built thereon,
Figure 6 is a side view of a cutting knife,
Figure 7 is a top view of the cutting knife of Figure 6,
Figure 8 is an end view of the cutting knife of Figure 6, and

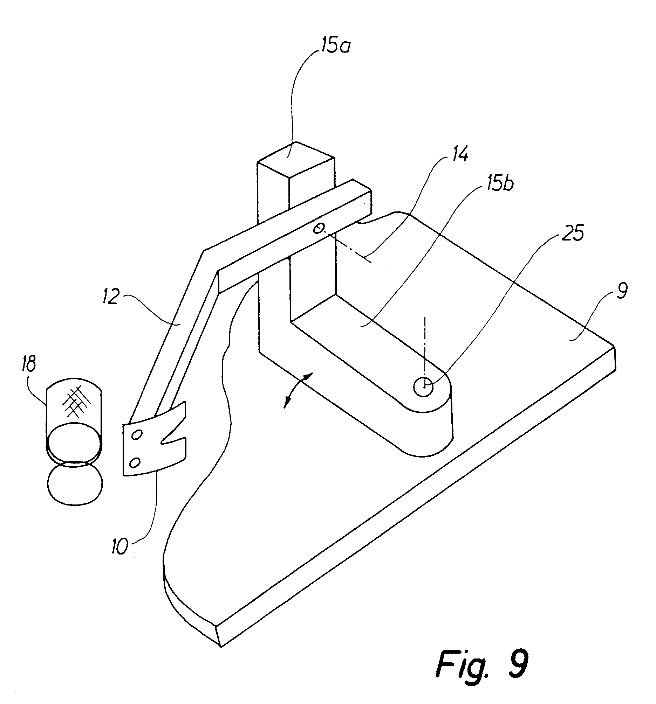

Figure 9 is a diagrammatic and perspective view of the suspension of the cutting knife on the plate of the tool, said tool being turned upside down and all the pneumatic cylinders being removed.

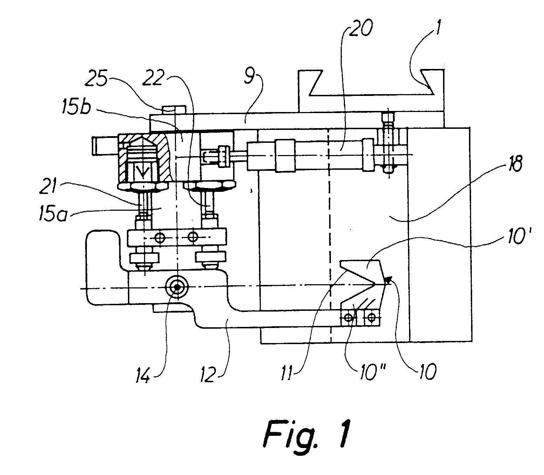

The tool illustrated in Figure 1 serves to automatically cutting off the moulding excess from moulded plastic blanks, such as moulded soles on shoes. The sole and/or the shoe can be fixed in a fixture not shown, and the tool illustrated can then be moved around the blank while the moulding excess, such as moulding fins, are cut off. The tool can for instance be moved by means of a manipulating industrial robot not shown. This robot can be connected to the tool through a dovetailed member 1 on said tool.

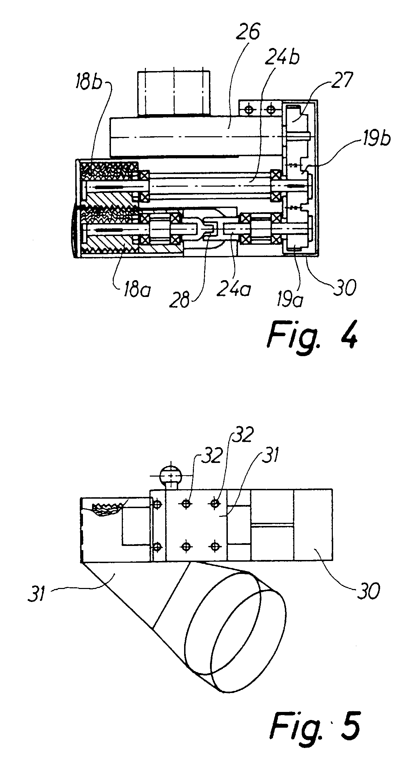

The tool comprises a plate 9, on which a self-centering cutting knife 10 is suspended. As it is diagrammatically indicated at 18, pulling off means, such as in form of a pair of co-acting pulling off rollers, cf. also Figure 4, may be arranged adjacent the cutting knife 10, said pulling off rollers pulling off the moulding excess cut off from each blank. The moulding excess is typically fin material. The plastic blanks are typically made of polyurethane.

The cutting knife 10 can be mounted in the tool by means of a supporting arm 12, which is movable about two axes, viz. an axis 14 perpendicular to the paper and an axis 25 parallel to the plane of the paper. As illustrated, the cutting knife 10 can be provided with a V-shaped insertion 11.

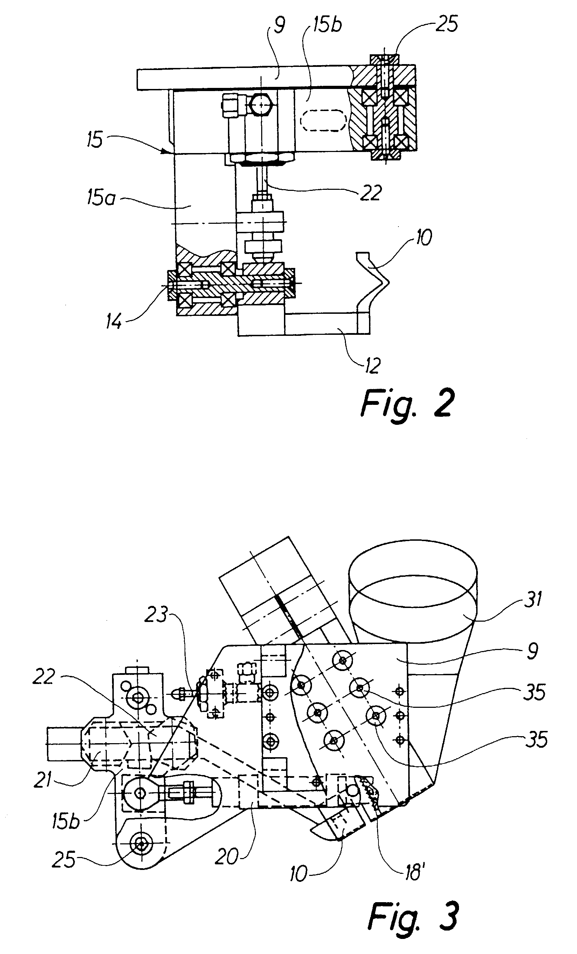

The bearing 14 is provided on the vertical leg 15a of a substantially L-shaped columnar member 15. The columnar member 15 is rotatably arranged on the plate 9, where the second leg 15b of the is rotatably arranged about the axis 25. In the moment the cutting off of the moulding excess is initiated, the supporting arm is retained/controlled by a first and a second pneumatic cylinder. The first pneumatic cylinder is indicated at 20 and the second pneumatic cylinder is indicated at 23, cf. Figure 3. These pneumatic cylinders are arranged substantially parallel to the plate 9. The supporting arm is also retained/controlled by a third and a fourth pneumatic cylinder 21 and 22, respectively, which are arranged substantially perpendicular to the plate 9. During the cutting procedure, the first cylinder 20 presses the knife towards the blank by means of the leg 15 b while the three remaining cylinders are inactive. These cylinders operate according to an accurately set activating programme in such a manner that it is ensured that they are active/inactive at the correct times.

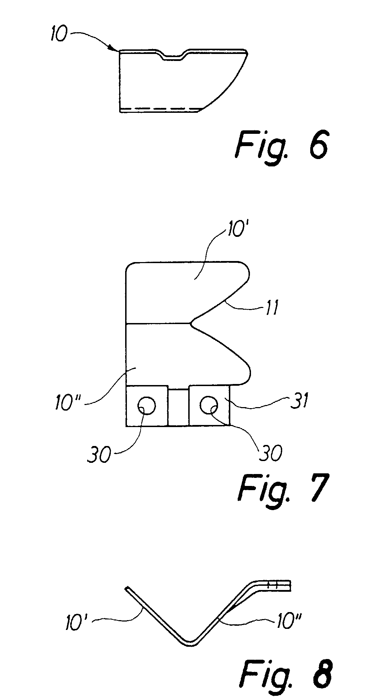

As illustrated in Figure 2, the cutting knife 10 may be shaped substantially as a square root symbol when seen from the end, cf. Figure 8. Again a V-shaped insertion 11 is provided in the V-shaped portion 10', 10" of the cutting knife, cf. Figure 7. As shown in Figure 7, this insertion may be rounded. The edge of the knife is placed in the insertion 11.

The pulling off rollers 18a, 18b of the pulling off means can be provided with a rough and/or a worm-like surface. They rotate preferably at a circumferential velocity being three to four times higher than the cutting velocity of the knife 10 relative to the blank.

At least one of the shafts 24a, 24b of the pulling off rollers 18a, 18b can be resilient. In Figure 4 the shaft 24a is resilient because a cardan joint 28 forms part thereof. As a result, the pulling off rollers can yield slightly during the pulling off of the material cut off, and besides the distance between the pulling off rollers 18a and 18b can be adjusted by means of a pneumatic adjustment cylinder coupled to said pulling off rollers but not shown. The resulting operation of the tool is very flexible.

Figure 5 shows how a housing 30 surrounding the pulling off rollers 18a,18b can be provided with a mounting member 31 with mounting openings 32. The plate 9 is provided with similar openings in such a manner that the housing and consequently the pulling off rollers can be easily secured to the plate by means of fastening means 35, such as optionally bolts.

A suction funnel 31 can be mounted on the housing 30 for removal of the moulding excess cut off by means of the knife 10 from each blank.

Concerning the pulling off rollers 18a, 18b it should be noted, that said pulling off rollers can be driven by an adjacent motor 26, cf. Figure 4, such as a pneumatic motor or an electric motor, where a gear wheel 26 on the motor shaft is connected to co-acting gear wheels 19b and 19a on the shaft 24b and the shaft 24a, respectively. The pulling off rollers 18a, 18b can be secured to the plate 9 substantially parallel to said plate.

The present application refers to ""pneumatic cylinder" for the sake of simplicity. These cylinders can also be hydraulically driven, or they can be replaced by electric or mechanical actuators for carrying out a linear movement.

Figures 6, 7 and 8 illustrate particularly clearly an embodiment of the cutting knife 10. The knife member 10'' is as shown provided with a web 31 with holes 30 allowing said knife to be screwed onto the supporting arm 12.

The invention may be modified in many ways without thereby deviating from scope of the invention.

## Claims

1. A tool for automatically cutting off the moulding excess from plastic blanks, such as soles directly moulded onto shoes, whereby the individual blanks are fixed in a fixture and the tool is moved for instance by a manipulating industrial robot, or vice versa the tool is fixed in the fixture and the blank is moved by the robot, **characterised** in that it comprises a plate (9), where a self-centering cutting knife (10) is suspended on said plate, and that pulling off means, such as a pair of co-acting pulling off rollers (18, 18a, 18b) are provided adjacent said knife for pulling off moulding excess, such as fin material, cut off from each blank.

2. A tool as claimed in claim 1, **characterised** in that the cutting knife (10) is mounted on the plate (9) by means of a supporting arm (12), which is movable about two axes (14, 25) relative to the plate, and that the cutting knife (10) is provided with a substantially V-shaped insertion (11).

3. A tool as claimed in claim 1 or 2, **characterised** in that the supporting arm (12) is retained/controlled in the moment the cutting is initiated by means of a first and a second pneumatic cylinder (20, 23) arranged substantially parallel to the plate (9) as well as by means of a third and a fourth pneumatic cylinder (21, 22) arranged substantially perpendicular to said plate (9).

4. A tool as claimed in one or more of the claims 1 to 3, **characterised** in that the first pneumatic cylinder (20) is adapted to press the cutting knife (10) against the blank during the cutting procedure.

5. A tool as claimed in one or more of the claims 1 to 4, **characterised** in that the cutting knife (10) is shaped substantially as a square root symbol when seen from the end, and that a V-shaped insertion (11) is provided in the V-shaped portion thereof.

6. A tool as claimed in one or more of the claims 1 to 5, **characterised** in that the co-acting pulling off rollers (18a, 18b) of the pulling off means are provided with a rough and/or worm-like surface, and that they can preferably rotate at a circumferential velocity being three to four times higher than the cutting velocity of the knife (10).

7. A tool as claimed in one or more of the claims 1 to 6, **characterised** in that at least one of the shafts (24a, 24b) of the pulling off rollers (18a, 18b) is resilient, a cardan joint (28) forming part thereof, and that the distance between the pulling off rollers is adjustable by means of a pneumatic adjustment cylinder coupled to one of the pulling off rollers.

8. A tool as claimed in one or more of the claims 1 to 7, **characterised** in that a suction funnel (31) is mounted on a housing (30) for the pulling off rollers (18a, 18b) for the removal of moulding excess cut off.

9. A tool as claimed in one or more of the claims 1 to 8, **characterised** in that the pulling off rollers (18a, 18b) are driven through a gear wheel arrangement (19a, 19b, 27) by a motor (26) adjacent the latter.

10. A tool as claimed in one or more of the claims 1 to 9, **characterised** in that the two pulling off rollers (18a, 18b) are secured to the plate (9) substantially parallel thereto.
